# EUROPÄISCHE PATENTSCHRIFT

(11) **EP 1 325 465 B1**
(45) Veröffentlichungstag und Bekanntmachung des Hinweises auf die Patenterteilung: **20.07.2005**
(21) Anmeldenummer: 01969074.2
(22) Anmeldetag: 26.09.2001
(51) Int. Cl.: G06K 17/00, G06K 7/00, G06F 1/00

(54) **ELEKTRONISCHES MODUL MIT EINEM STECKVERBINDER ZU EINER ÜBERGEORDNETEN RECHENEINHEIT**
ELECTRONIC MODULE COMPRISING A CONNECTOR COUPLED TO A SUPERORDINATE ARITHMETIC UNIT
MODULE ELECTRONIQUE COMPRENANT UN CONNECTEUR A FICHE POUVANT ETRE CONNECTE A UNE UNITE DE CALCUL PLACEE AU-DESSUS

(30) Priorität: 27.09.2000 AT 16382000
(43) Veröffentlichungstag der Anmeldung: 09.07.2003
(73) Patentinhaber: Omnikey AG, 65205 Wiesbaden (DE)
(72) Erfinder: SCHMID, Kurt, A-4030 Linz (AT); SCHNABEL, Uwe, 65187 Wiesbaden (DE)
(74) Vertreter: Secklehner, Günter
(86) Internationale Anmeldenummer: PCT/AT2001/000305
(87) Internationale Veröffentlichungsnummer: WO 2002/027646

(56) Entgegenhaltungen:
- EP-A- 0 744 708
- EP-A- 0 883 083
- WO-A-00/42491
- WO-A-89/12864
- WO-A-99/46682
- US-A- 5 149 945

## Beschreibung

Die Erfindung betrifft ein elektronisches Modul mit kompakter Bauform zur Ankopplung an eine übergeordnete Recheneinheit, wie es im Anspruch 1 beschrieben ist.

Es sind bereits sogenannte Dongles bekannt, welche elektronische Schlüssel beinhalten und kryptographische Algorithmen ausführen können. Derartige Dongles sind kompakte Geräte die derart ausgestaltet sind, daß sie auch leicht von einem Benutzer eingesteckt bzw. getragen werden können. Dongles werden üblicherweise über Standard-Schnittstellen, wie serielle, parallele oder USB-Schnittstellen an entsprechende Rechnerplattformen angeschlossen. Dabei werden für die Ausführung der kryptographischen Algorithmen oder für die Speicherung der Schlüssel Standardbauelemente wie CPUs, Speicher und dgl. verwendet.

Zudem sind sogenannte Chipkarten- bzw. Smartcard-Leser bekannt, welche einen Chip auf dem entsprechenden kartenförmigen Träger kontaktieren. Derartige Lesevorrichtungen sind mit entsprechenden Rechnern über Standard-Schnittstellen, wie serielle, parallele oder USB-Schnittstellen verbindbar. Der Nachteil der sogenannten Dongles - welche üblicherweise als Nutzungsschutz für Software verwendet werden - liegt darin, daß diese fix programmiert sind und für neue Anwendungen bzw. Befugnisse ein neuer Dongle erforderlich ist. Der Nachteil der bekannten, sogenannten Chipkartenleser liegt darin, daß diese relativ großvolumig aufgebaut sind und es einen Anwender meist nicht zumutbar ist, derartige Lesegeräte bei sich zu tragen.

Die EP 0 744 708 A offenbart ein elektronisches Modul gemäß den Merkmalen des Oberbegriffes von Anspruch 1.

Der vorliegenden Erfindung liegt die Aufgabe zugrunde, ein Modul zum Auslesen und/oder Beschreiben von elektronischen Datenträgern zu schaffen, welches die kompakte Bauweise eines Dongles mit der Universalität eines Chipkartenlesers vereint.

Diese Aufgabe der Erfindung wird durch die Merkmale gemäß Anspruch 1 gelöst. Der Vorteil des erfindungsgemäßen Moduls liegt darin, daß dessen Funktionalität durch einfachen Austausch des entsprechenden Kartenkörpers bzw. Datenträgers wunschgemäß variiert werden kann. Durch die als entsprechende Steckverbinder ausgebildeten Schnittstellen, kann dieser Austausch auch von einem Laien, also ohne dem Erfordernis entsprechender Fachkenntnisse, problemlos vorgenommen werden. Die kompakte Bauform erlaubt es dabei, das Modul bzw. das entsprechende elektronische Lese- und/oder Schreibgerät direkt bei sich zu tragen, insbesondere in eine Tasche eines Kleidungsstückes einzustecken, ohne dadurch behindert zu werden. Das erfindungsgemäße Modul schafft also einen mulitfunktionalen, elektronischen Berechtigungs-, Zahlungs- und/oder Identifizierungsschlüssel mit personenbezogenen Festdaten und/oder fallweise zu aktualisierenden Daten.

Eine unkomplizierte, bevorzugt vollautomatische Adaptierung der unterschiedlichen Datenübertragungssysteme ist ermöglicht.

Ein bequemer Transport des Moduls, ähnlich einem Schlüssel, ist ermöglicht.

Es wird eine gute Kontaktierung mit dem entsprechenden Datenträger gewährleistet und es erübrigen sich zusätzliche Manipulationsvorgänge für einen Verbindungsaufbau nach dem Einsetzen des Datenträgers.

Zum besseren Verständnis der Erfindung wird diese anhand der in den nachfolgenden Figuren dargestellten Ausführungsbeispiele näher erläutert.

Es zeigen:
- Fig. 1: eine Recheneinheit für allgemeine Verwendungszwecke mit einer Mehrzahl von elektrischen Schnittstellen, wobei an eine dieser standardisierten Schnittstellen das erfindungsgemäße elektronische Modul angeschlossen ist;
- Fig. 2: das erfindungsgemäße elektronische Modul in Draufsicht, in stark vereinfachter, schematischer Darstellung;
- Fig. 3: eine andere Ausführungsform des erfindungsgemäßen Moduls mit zweiteiligem, aufklappbaren Gehäuse in vereinfachter Darstellung;
- Fig. 4: ein Blockschaltbild des erfindungsgemäßen Moduls und einer übergeordneten Recheneinheit in stark schematisierter Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

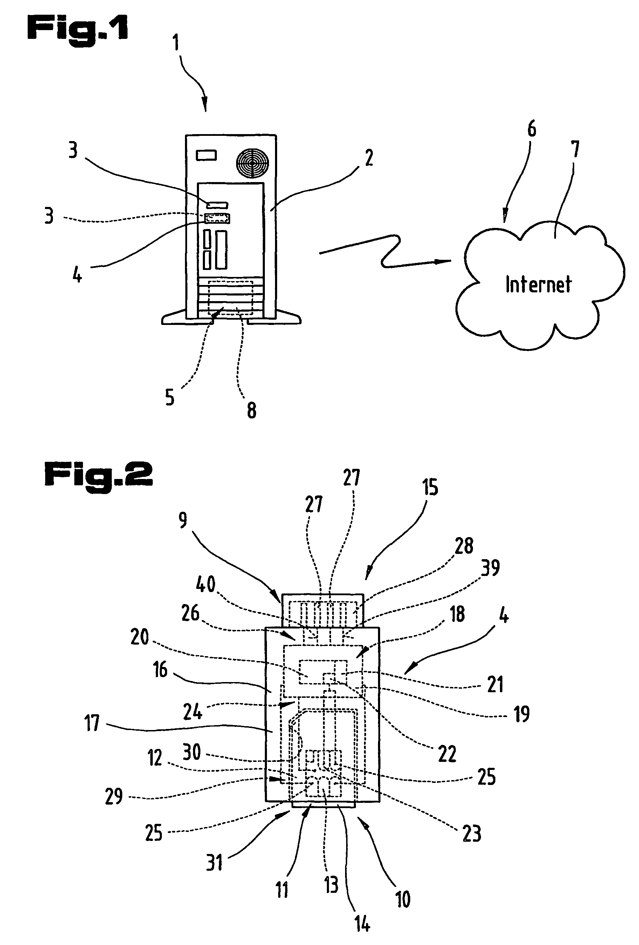

In Fig. 1 ist die Rückseite einer herkömmlichen Recheneinheit 1 veranschaulicht. Diese Recheneinheit 1 ist im konkreten Fall durch einen Rechner für allgemeine Verwendungszwecke, insbesondere durch einen Personal-Computer 2, gebildet. Die Recheneinheit 1 umfaßt eine Mehrzahl von standardisierten Schnittstellen, wie z.B. serielle, parallele und insbesondere wenigstens eine USB (Universal Serial Bus)-Schnittstelle 3. Ein erfindungsgemäßes, elektronisches Modul 4 ist dabei mit wenigstens einer Schnittstelle, insbesondere mit einer USB-Schnittstelle 3 der Recheneinheit 1 verbindbar.

Anstelle eines Personal-Computers 2 ist das erfindungsgemäße elektronische Modul 4 selbstverständlich auch an jede andere Recheneinheit 1, beispielsweise an einen Laptop, eine Workstation, einen mobilen Organizer bzw. einen sonstigen Handheld-PC anschließbar, sofern diese Recheneinheit 1 über die jeweiligen Spezifikationen, die zur Verbindung mit dem elektronischen Modul 4 erforderlich sind, verfügt.

Die Recheneinheit 1 ist dabei über wenigstens ein Kommunikationsmittel 5 mit einem globalen Kommunikationsnetzwerk 6, beispielsweise dem sogenannten Internet 7, verbindbar. Das Kommunikationsmittel 5 kann dabei zur Übertragung von Daten und/oder Audio- und/oder Videosignalen vorgesehen sein und beispielsweise durch ein sogenanntes Modem 8 gebildet sein. Das Modem 8 kann dabei zur drahtgebundenen und/oder drahtlosen Fernübertragung sowie zum Empfangen von Daten bzw. Signalen aus dem Kommunikationsnetzwerk 6 ausgebildet sein. Die Recheneinheit 1 umfaßt bevorzugt wenigstens eine nicht dargestellte Eingabevorrichtung, beispielsweise eine Tastatur oder ein Touchpad und/oder eine der Einfachheit halber ebenso nicht dargestellte Ausgabevorrichtung, z.B. einen Monitor oder ein Display.

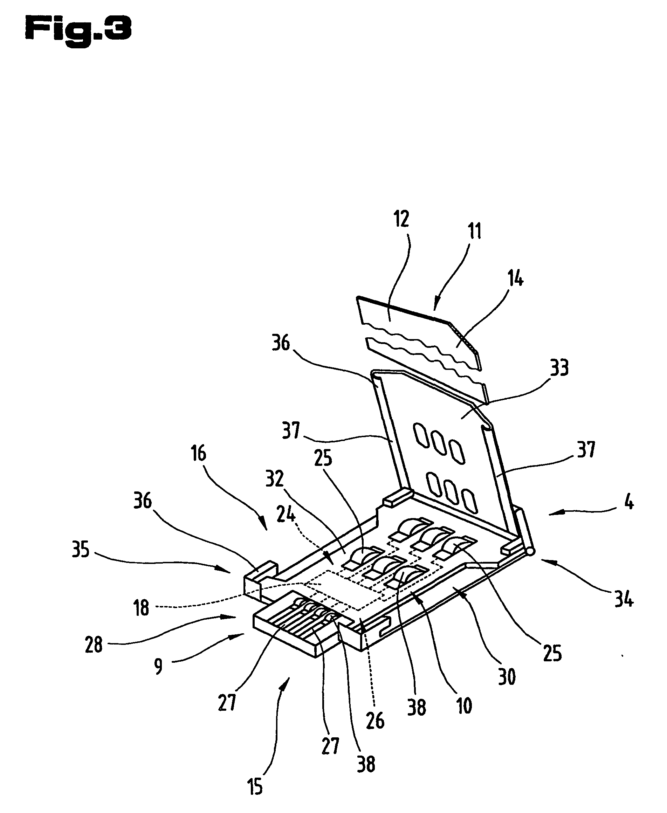

In den Fig. 2 und 3 sind zwei mögliche Ausgestaltungsvarianten der erfindungsgemäßen Module 4 veranschaulicht. Die nachfolgenden Figurenbeschreibungen sind dabei in Zusammenschau mit der Darstellung gemäß Fig. 1 zu lesen.

Das erfindungsgemäße Modul 4 weist eine erste Schnittstelle 9 auf, über welche das Modul 4 mit einer entsprechenden Schnittstelle, insbesondere mit einer USB-Schnittstelle 3, an einer Recheneinheit 1 verbindbar ist. Bevorzugt ist die erste Schnittstelle 9 derart ausgebildet, daß eine direkte Ankopplung bzw. ein direktes Anstecken an der jeweiligen Schnittstelle einer übergeordneten Recheneinheit 1 möglich ist. Das erfindungsgemäße Modul umfaßt weiters eine zweite Schnittstelle 10, über welche ein datenförmiger Datenträger 11, insbesondere ein Kartenkörper 12 mit einem auf diesem angeordneten bzw. in diesen eingesetzten, integrierten Schaltkreis 13, anschließbar ist. Bevorzugt ist der Kartenkörper 12 mit dem auf diesem angeordneten, integrierten Schaltkreis 13 bzw. IC durch eine sogenannte SIM-Karte 14 gebildet. Alternativ ist es auch denkbar, als Datenträger 11 bzw. als Kartenkörper 12 eine sogenannte Smart- bzw. Chipkarte, eine Flashkarte oder eine sogenannte Multimedia-Card zu verwenden. Grundsätzlich sind bei entsprechender Auslegung des Moduls 4 sämtliche Kartenkörper 12 mit entsprechenden, integrierten Schaltkreisen 13 verwendbar bzw. über das Modul 4 verarbeitbar. Grundsätzlich können Datenträger 11 verwendet werden, wie sie z.B. in ISO 7816/1 beschrieben sind.

Um den besonderen Vorteil kompakter Abmessungen des Moduls 4 erzielen zu können, empfiehlt es sich jedoch, elektronische Datenträger 11 in Form sogenannter SIM-Karten mit Abmessungen von in etwa 25 x 15 mm einzusetzen.

Während die zweite Schnittstelle 10 für den Kartenkörper 12 bevorzugt in Art einer Steckbuchse ausgebildet ist, ist die erste Schnittstelle 9 des Moduls 4 bevorzugt als vom Modul 4 vorkragender Steckerteil 15 zum Einsetzen in eine korrespondierende Schnittstelle der Recheneinheit 1 ausgebildet.

Das Modul 4 umfaßt ein Gehäuse 16 oder einen entsprechenden Tragkörper 17 in bzw. auf welchem die erste Schnittstelle 9 und die zweite Schnittstelle 10 ausgebildet sind. Das Gehäuse 16 bzw. der Tragkörper 17 ist bevorzugt aus Kunststoff gefertigt und weist vorzugsweise Markierungen und/oder Beschriftungen, zumindest zur Identifikation der ersten Schnittstelle 9 und der zweiten Schnittstelle 10 auf.

Zwischen der ersten Schnittstelle 9 und der zweiten Schnittstelle 10 ist eine Interface-Logik 18 bzw. ein demgemäßer elektronischer Schnittstellenadapter angeordnet. Diese Interface-Logik 18 ist dabei bevorzugt in das Gehäuse 16 integriert oder auf einem entsprechenden Tragkörper 17 angeordnet bzw. von diesem allseitig umschlossen. Vor allem wenn das Modul 4 ein Massenprodukt darstellt empfiehlt es sich, die Interface-Logik 18 durch ein Spritzgußverfahren wenigstens teilweise in eine Kunststoffmasse einzugießen, da dadurch eine kostengünstige Fertigung des Moduls 4 mit den wenigstens teilweise zugreifbaren Schnittstellen 9, 10 ermöglicht ist.

Die primäre Aufgabe der Interface-Logik 18 besteht darin, eine Anpassung des für die erste Schnittstelle 9 gültigen Kommunikationsprotokolls an das für die zweite Schnittstelle 10 gültige Kommunikationsprotokoll zu schaffen. Die Interface-Logik 18 fungiert demnach als elektronischer Adapter bzw. Übersetzer zwischen den jeweils unterschiedlichen Kommunikationsprotokollen für die erste Schnittstelle 9 und die zweite Schnittstelle 10. Im speziellen umfaßt bzw. bildet die Interface-Logik 18 einen sogenannten Interpreter 19, welcher als Übersetzer zwischen einem ersten Kommunikationsprotokoll und einem zweiten Kommunikationsprotokoll fungiert. Bei einer unidirektionalen Übertragung von Daten bzw. Informationen von der ersten Schnittstelle 9 zur zweiten Schnittstelle 10 oder umgekehrt ist es ausreichend, wenn der Interpreter 19 als einfach operierender Interpreter ausgebildet ist. Für den Fall, daß über die beiden Schnittstellen 9, 10 ein bidirektionaler Informations- bzw. Datenaustausch stattfinden soll, ist der Interpreter 19 als mehrfach operierender Interpreter 19 auszubilden.

Das zuvor Beschriebene ist vor allem davon abhängig, ob über das Modul 4 einzig Schreib- oder Lesevorgänge gegenüber dem Datenträger 11 bzw. Kartenkörper 12 ausgeführt werden sollen oder ob auf dem Datenträger 11 Schreib- und/oder Lesezugriffe vorgenommen werden sollen. Das Modul 4 kann in diesem Fall auch als Schreib- und/oder Lesevorrichtung für den entsprechenden Datenträger 11 bezeichnet werden.

Typischerweise ist die Interface-Logik 18 durch einen Mikrorechner 20 bzw. eine miniaturisierte elektronische Datenverarbeitungsvorrichtung bzw. CPU zur Abarbeiten eines vorgegebenen Programmablaufes gebildet. Zur Hinterlegung des vordefinierten, vom Mikrorechner 20 abzuarbeitenden Programmes umfaßt die Interface-Logik 18 auch eine elektronische Speichervorrichtung 21. Diese Speichervorrichtung 21 kann dabei als eigenständige Baueinheit ausgebildet sein oder aber auch direkt im Mikrorechner 20 integriert sein. Die Speichervorrichtung 21 kann auch zur flüchtigen Zwischenspeicherung von Daten verwendet werden, also als sogenannter Puffer für zwischen den Schnittstellen 9, 10 übertragende Daten dienen. Ebenso kann dieser Speichervorrichtung 21 als RAM-Speicher bzw. Arbeitsspeicher für den Mikrorechner 20 dienen. Zudem kann die Speichervorrichtung 21 nichtflüchtige Speicheranteile, wie z.B. einen EEPROM-Speicher oder einen Flash-Speicher zur dauerhaften Hinterlegung von Daten aufweisen. Dieser nichtflüchtige Speicher der Speichervorrichtung 21 ist dabei bevorzugt über die erste Schnittstelle 9 auslesbar und/oder beschreibbar.

Alternativ ist es bei Abarbeitung weniger komplexer Aufgaben durch die Interface-Logik 18 auch möglich, letztere durch eine fix programmierte Gatteranordnung mit entsprechendem Steuerablauf zu bilden. Hierfür kommen beispielsweise sogenannte PAL- oder XILINX-Bausteine zum Einsatz.

Die Interface-Logik 18 umfaßt weiters einen Taktgenerator 22, welcher ein elektrisches Taktsignal erzeugt, das den Arbeitstakt für den Mikrorechner 20 und/oder für den auf einem Kartenkörper 12 angeordneten, integrierten Schaltkreis 13 vorgibt.

Dieser Taktgenerator 22 ist dabei durch eine geeignete Oszillatorschaltung mit oder ohne Schwingquarz gebildet. Jedenfalls gibt der Taktgenerator 22 den Arbeitstakt für den integrierten Schaltkreis 13 des Kartenkörpers 12 vor. Zur Übertragung des entsprechenden Taktsignales ist der Ausgang des Taktgenerators 22 mit einem Kontaktelement 23 an der zweiten Schnittstelle 10 elektrisch leitend verbunden. Das Kontaktelement 23 ist dabei derart positioniert und ausgebildet, daß es mit dem entsprechenden Takteingang des integrierten Schaltkreises 13 in elektrische Verbindung treten kann, sobald der Kartenkörper 12 an die zweite Schnittstelle 10 angeschlossen wird.

Neben dem Ausgang des Taktgenerators 22 umfaßt die Interface-Logik 18 zusätzliche Ein- und/oder Ausgänge 24, welche zu entsprechenden Kontaktelementen 25 an der zweiten Schnittstelle 10 führen. Darüber hinaus sind an der Interface-Logik 18 weitere Ein- und/oder Ausgänge 26 vorgesehen, welche mit weiteren Kontaktelementen 27 der ersten Schnittstelle leitungsverbunden sind.

Diese Kontaktelemente 27 an der ersten Schnittstelle 9 bilden eine Steckverbindungsvorrichtung 28 zur direkten, d.h. kabellosen, elektrischen Verbindung mit der USB-Schnittstelle 3 einer Recheneinheit 1. Die Kontaktelemente 25 der zweiten Schnittstelle 10 sind dabei derart angeordnet und konstruiert, daß sie eine weitere Steckverbindungsvorrichtung 29 zu einem austauschbaren Kartenkörper 12 mit einem integrierten Schaltkreis 13 bilden. Die zweite Schnittstelle 10 bzw. die zweite Steckverbindungsvorrichtung 29 ist dabei intern angeordnet, d.h. innerhalb des Moduls 4 ausgebildet. Hierfür ist im Inneren des Moduls 4 bzw. im Gehäuse 16 eine Ausnehmung 30 angeordnet, in welche der Kartenkörper 12 auswechselbar einsetzbar ist und in welcher die Kontaktelemente 25 der zweiten Schnittstelle 10 angeordnet sind. Die Anordnung und Ausgestaltung dieser Kontaktelemente 25 ist dabei derart getroffen, daß sie mit einer entsprechenden Kontaktfläche des Kartenkörpers 12 bzw. dessen Schaltkreis 13 in elektrische Verbindung versetzt werden können. Diese Kontaktelemente 25 der zweiten Schnittstelle 10 sind dabei von außen nicht zugreifbar und zumindest teilweise vom Gehäuse 16 umschlossen. Im Modul 4 - gemäß Fig. 2 - ist lediglich eine kleine Ausnehmung 30 in Form eines Aufnahmeschlitzes 31 ausgebildet, über welchen der Kartenkörper 12 zumindest teilweise in das Gehäuse 16 eingeführt bzw. aus diesem wieder entnommen werden kann. Wesentlich ist dabei, daß die Ausnehmung 30 sowie die Kontaktelemente 25 und die Halterung für den Kartenkörper 12 derart ausgebildet sind, daß der Kartenkörper 12 von einem Benutzer des elektronischen Moduls 4 ohne Zuhilfenahme von Werkzeugen oder gesonderten Hilfsmitteln ausgetauscht werden kann.

Die Kontaktelemente 25 sind jedenfalls derart gelagert und positioniert, daß diese beim Einsetzen des Kartenkörpers 12 automatisch bzw. zwangsweise mit dem integrierten Schaltkreis 13 elektrisch verbunden werden.

Während die zweite Schnittstelle 10 zur Vermeidung von Kurzschlüssen und/oder zwecks Absicherung gegenüber einem Anschluß von untauglichen Datenträgern 11 integriert bzw. innerhalb des Moduls 4 ausgebildet ist, ist die erste Schnittstelle 9 extern bzw. außerhalb des elektronischen Moduls 4 ausgebildet, sodaß ein einfaches Anschließen, insbesondere Anstekken, an eine geeignete, standardisierte Datenschnittstelle einer Recheneinheit 1 möglich ist.

Die Kontaktelemente 27 der ersten Schnittstelle 9 ragen also steckerartig vom Gehäuse 16 des Moduls 4 vor.

Wie insbesondere aus Fig. 2 ersichtlich ist, ist ein entsprechend ausgebildeter Kartenkörper 12 über den entsprechenden Aufnahmeschlitz 31 in die Ausnehmung 30 in einfacher Art und Weise in das Modul 4 einsteckbar.

Wie insbesondere aus Fig. 3 ersichtlich ist, ist es aber auch möglich, ein mehrteiliges Gehäuse zur Aufnahme bzw. Halterung des Kartenkörpers 12 vorzusehen. Das Gehäuse gemäß Fig. 3 besteht dabei aus einem Bodenteil 32 und wenigstens einem mit diesem korrespondierenden Deckelteil 33. Der Bodenteil 32 ist dabei mit dem Deckelteil 33 lösbar verbunden und zwischen dem Bodenteil 32 und dem Deckelteil 33 ist die Ausnehmung 30 zur Aufnahme eines entsprechenden Kartenkörpers 12 ausgebildet.

Zur unverlierbaren Zuordnung des Bodenteils 32 zum Deckelteil 33 sind beide Teile bevorzugt über eine Schwenkachse 34 gelenkig miteinander verbunden. Zudem ist zwischen dem Bodenteil 32 und dem Deckelteil 33 eine geeignete Verbindungsvorrichtung 35, bevorzugt eine Schnappverbindung 36, zum werkzeuglosen Schließen und Öffnen des mehr-, insbesondere des zweiteiligen Moduls 4 ausgebildet.

Bei dieser Ausgestaltung ist der Kartenkörper 12 in seinem randseitigen Bereich von im Querschnitt im wesentlichen U-förmigen Haltestegen 37 gehaltert. Diese Haltestege 37 sind dabei bevorzugt am Deckelteil 33 ausgebildet. Selbstverständlich ist es auch möglich, die Haltestege 37 bzw. demgemäße Führungsstege für den Kartenkörper 12 am Bodenteil 32 vorzusehen.

Der Bodenteil 32 umfaßt jedenfalls die Kontaktelemente 25 der zweiten Schnittstelle 10, welche nach dem Schließen des Gehäuses 16 von außen nicht mehr zugänglich sind und dabei zwangsweise mit entsprechenden Kontaktflächen am Kartenkörper 12 in Verbindung treten. Zudem umfaßt das Bodenteil 32 die weiteren Kontaktelemente 27 der ersten Schnittstelle 9 und die Interface-Logik 18. Da sowohl die Kontaktelemente 25 und die Interface-Logik 18 auf einem einzigen Element, insbesondere auf dem Bodenteil 32 angeordnet sind, erübrigen sich in vorteilhafter Art und Weise flexible Leitungsverbindungen zwischen bewegten Teilen, wodurch eine langfristige Einsatzdauer des Moduls 4 auch bei oftmaligem Öffnen und Schließen des Gehäuses 16 gegeben ist.

Die Kontaktelemente 25 und/oder die weiteren Kontaktelemente 27 sind bevorzugt durch federelastisch gelagerte Kontaktzungen 38 gebildet.

Wesentlich ist, daß die Abmessungen des Gehäuses 16 in etwa den Abmessungen des einzusetzenden Kartenkörpers 12 entsprechen. Typischerweise beträgt die Länge des Moduls 4 bis zu 50 mm und dessen Breite bis zu 30 mm. Das Gehäuse 16 ist also nur geringfügig größer als der Kartenkörper 12 selbst.

Dadurch ist es möglich, das Modul 4 mit der Größe eines mechanischen Schlüssels oder eines sogenannten Dongles einfach zu transportieren bzw. am Körper des Benutzers zu tragen oder in geeignete Taschen, wie z.B. in eine Geldbörse oder in eine Kleidungstasche einzustecken. Wesentlich ist hierbei auch, daß der Kartenkörper 12 unverlierbar im Gehäuse 16 des Moduls 4 gehaltert ist.

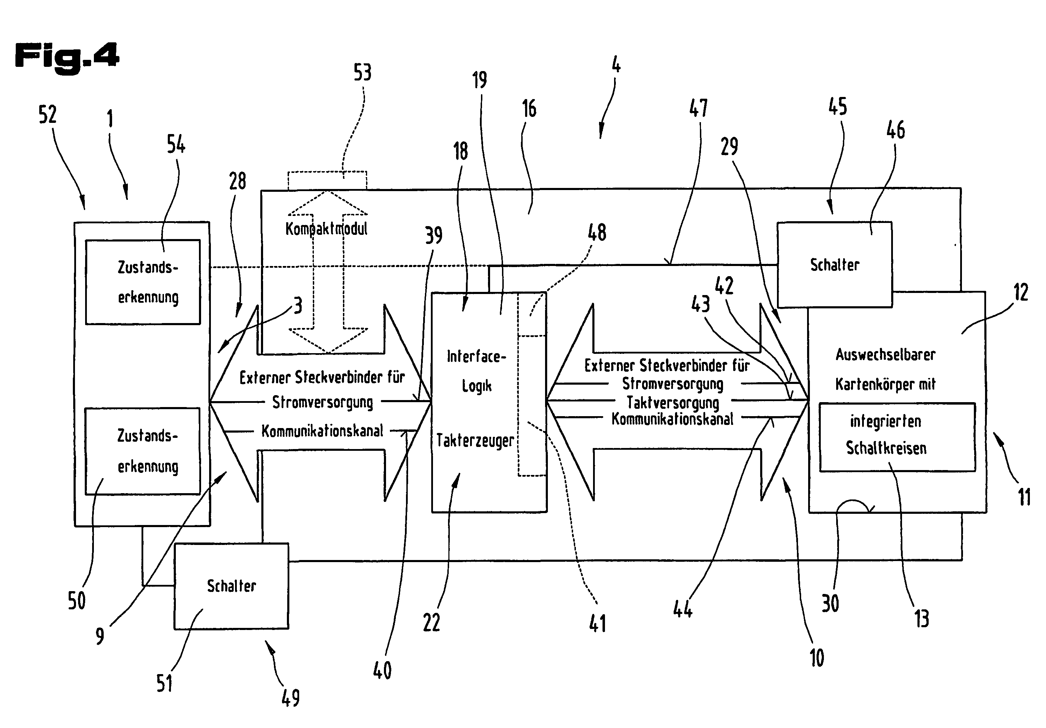

In Fig. 4 ist ein Blockschaltbild des erfindungsgemäßen Moduls 4 in Kombination mit einer übergeordneten Recheneinheit 1 gezeigt, wobei dieses Modul 4 an eine entsprechende Standardschnittstelle, bevorzugt an die USB-Schnittstelle 3 der Recheneinheit 1, angeschlossen ist. Für vorhergehend bereits beschriebenen Teile wurden in Fig. 4 wiederum gleiche Bezugszeichen verwendet, sodaß die vorstehenden Beschreibungen sinngemäß auf gleiche Teile mit gleichen Bezugszeichen übertragbar sind.

Das Modul 4 weist wiederum zumindest die erste, externe Schnittstelle 9 und zumindest die zweite, bevorzugt im Gehäuse 16 angeordnete bzw. integrierte Schnittstelle 10 auf. Dadurch, daß die Schnittstelle 9 extern angeordnet ist und die zweite Schnittstelle 10 integriert bzw. als Buchse ausgebildet ist, wird ausgeschlossen, daß das Modul 4 fehlerhaft an eine Recheneinheit 1 anschließbar ist. Zwischen den beiden elektrischen Schnittstellen 9 oder 10 unterschiedlichen Typs ist wiederum die elektronische Interface-Logik 18 geschaltet und ist dabei zumindest eine galvanische Trennung zwischen Datenleitungen 40 der ersten Schnittstelle 9 und Datenleitungen der zweiten Schnittstelle 10 gegeben. Die Interface-Logik 18 umfaßt wiederum einen geeigneten Taktgenerator 22 zur Erzeugung eines Takt- bzw. Arbeitssignals für die elektronischen Schaltkreise.

Die externe Steckverbindungsvorrichtung 28 bzw. die erste Schnittstelle 9 umfaßt wenigstens eine Stromversorgungsleitung 39 und wenigstens eine Kommunikationsleitung bzw. Datenleitung 40. Über die wenigstens eine Stromversorgungsleitung 39 wird zumindest die Interface-Logik 18 und der Taktgenerator 22 mit der für deren Betneb erforderlichen elektrischen Energie, ausgehend von der jeweiligen Schnittstelle, insbesondere der USB-Schnittstelle 3 der Recheneinheit 1, versorgt. In Abhängigkeit der an der Schnittstelle der Recheneinheit 1 vorliegenden Höhe der elektrischen Spannung ist es auch möglich, daß sich die Stromversorgungsleitung 39 bis an ein entsprechendes Kontaktelement 25 (siehe Fig. 2) der zweiten Schnittstelle 10 erstreckt und somit den integrierten Schaltkreis 13 auf dem Kartenkörper 12 mit der jeweils erforderlichen elektrischen Energie versorgt.

Sofern die an der Schnittstelle der Recheneinheit 1 abgreifbaren Spannungspotentiale nicht geeignet sind, den integrierten Schaltkreis auf dem Kartenkörper 12 mit der entsprechenden elektrischen Spannung zu versorgen, so ist zusätzlich ein Spannungswandler 41 vorgesehen. Dieser elektrische Spannungswandler 41 ist dabei der Interface-Logik 18 zugeordnet und konvertiert eine eingangsseitig zugeführte elektrische Spannung in die jeweils benötigte elektrische Ausgangsspannung zur Versorgung des integrierten Schaltkreises 13 auf dem Kartenkörper 12. Hierzu ist wenigstens eine Stromversorgungsleitung 42 zwischen dem Spannungswandler 41 und dem entsprechenden Kontaktelement 25 der zweiten Schnittstelle 10 ausgeführt. Gleichfalls ist ausgehend vom Taktgenerator 22 zum jeweiligen Kontaktelement 23 (siehe Fig. 2) der zweiten Schnittstelle 10 eine Taktleitung 43 vorgesehen, über welche dem integrierten Schaltkreis 13 auf dem Kartenkörper 12 das entsprechende Taktsignal zugeführt wird.

Zudem erstreckt sich zwischen der Interface-Logik 18 und der zweiten Schnittstelle 10 wenigstens eine Datenleitung 44, über welche zwischen der Interface-Logik 18 und dem integrierten Schaltkreis 13 eine unidirektionale oder auch bidirektionale Kommunikation aufgebaut werden kann. Üblicherweise sind wenigstens zwei Datenleitungen 44 vorgesehen, welche einen entsprechenden Kommunikationskanal zwischen der Interface-Logik 18 und dem integrierten Schaltkreis 13 darstellen.

Bevorzugt umfaßt das Modul 4 weiters eine erste Erfassungsvorrichtung 45, über welche das Vorhandensein eines Kartenkörpers 12 im Gehäuse 16 des Moduls 4 festgestellt bzw. überprüft werden kann. Vorzugsweise ist diese Erfassungsvorrichtung 45 durch wenigstens einen mechanischen Schalter 46 gebildet, welcher beim Einführen eines entsprechenden Kartenkörpers 12 in das Modul 4 zwangsweise betätigt wird. Über diesen Schalter 46 kann in Abhängigkeit des Schaltzustandes, d.h. in Abhängigkeit davon, ob der Schalter 46 geöffnet oder geschlossen ist, die Präsenz eines Kartenkörpers 12 bzw. eines entsprechend integrierten Schaltkreises 13 ermittelt werden. Die Erfassungsvorrichtung 45 bzw. der Schalter 46 ist über wenigstens eine Signalleitung 47 mit der Interface-Logik 18 verbunden und innerhalb der Ausnehmung 30 im Gehäuse 16 angeordnet, sodaß ein Zugriff von außen durch den Benutzer des Moduls 4 im Regelfall nicht ermöglicht ist.

Anstelle eines mechanisch betätigten Schalters 46 bzw. Mikroschalters ist es selbstverständlich auch möglich, die Erfassungsvorrichtung 45 durch eine geeignete Meßvorrichtung 48 zu bilden. Diese Meßvorrichtung 48 kann dabei zur Erfassung des elektrischen Widerstandes oder des Stromverbrauches an der zweiten Schnittstelle 10 ausgebildet sein. Die Meßvorrichtung 48 ist bevorzugt Bestandteil der Interface-Logik 18. Sobald von der Meßvorrichtung 48 ein entsprechender Stromfluß über die zweite Schnittstelle 10 festgestellt wird, kann davon ausgegangen werden, daß ein integrierter Schaltkreis 13 mit der zweiten Schnittstelle 10 gekoppelt wurde und können daraufhin die entsprechenden Maßnahmen, insbesondere Initialisierungen des Systems eingeleitet werden.

Darüber hinaus ist es auch möglich, die erste Erfassungsvorrichtung 45 kontaktlos auszubilden, indem optische und/oder induktive Erfassungselemente im Bereich der Ausnehmung 30 für den Kartenkörper 12 angeordnet werden.

Anhand der Veränderung der elektrischen Eigenschaften dieser berührungslos arbeitenden, optischen und/oder induktiven Erfassungselemente kann dann von der Interface-Logik 18 auf das Vorliegen oder das Fehlen eines auswechselbaren Kartenkörpers 12 geschlossen werden.

Gegebenenfalls ist auch eine zweite Erfassungsvorrichtung 49 ausgebildet, welche zur Erfassung des Vorliegens einer ordnungsgemäßen bzw. funktionstauglichen Steckverbindung an der ersten Schnittstelle 9 des Moduls 4 vorgesehen ist. Diese zweite Erfassungsvorrichtung 49 kann dabei rechnerseitig oder aber auch modulseitig ausgebildet sein.

Typischerweise umfaßt die zweite Erfassungsvorrichtung 49 eine rechnerseitige Zustandserkennung 50 für die jeweilige Schnittstelle, insbesondere die USB-Schnittstelle 3.

Üblicherweise wird die rechnerseitige Zustandserkennung 50 durch eine entsprechende Programmroutine gebildet, welche die an der jeweiligen Schnittstelle der Recheneinheit 1 vorliegenden Zustände, insbesondere ob das Modul 4 angeschlossen ist oder nicht, erfaßt. Bevorzugt ist die zweite Erfassungsvorrichtung 49 bzw. die Zustandserkennung 50 durch eine von der übergeordneten Recheneinheit 1 ausführbare Programmroutine, insbesondere durch einen sogenannten Treiber für Hardwarekomponenten, gebildet. Dieser rechnerseitig installierbare Treiber schafft zudem die Kommunikation mit dem elektronischen Modul 4, indem die erforderlichen Initialisierungen, bevorzugt vollautomatisch, ausgeführt werden. Der jeweils rechnerseitig installierte Treiber ist dabei auf das an der jeweiligen Recheneinheit 1 installierte Betriebssystem abgestimmt.

Alternativ ist es aber auch möglich, die zweite Erfassungsvorrichtung 49 durch eine Meßvorrichtung zur Erfassung des elektrischen Widerstandes oder des Stromflusses über die erste Schnittstelle 9 zu bilden oder aber auch durch einen bei Aktivierung der Steckverbindung 28 zwangsweise betätigten, elektrischen Schalter 51 zu bilden. Dieser Schalter 51 ist dabei bevorzugt mit der Zustandserkennung 50 der Recheneinheit 1 wirkungsverbunden.

Unabhängig davon ist es aber auch möglich, daß die zweite Erfassungsvorrichtung 49 durch einen sogenannten Handshake-Verbindungsaufbau implementiert ist, gemäß welchem nach Aussendung eines Abfragesignals durch eine Rechenheit 1 von der Interface-Logik 18 ein entsprechendes Rückantwortsignal rückübermittelbar ist. Ebenso ist es möglich, die erste Erfassungsvorrichtung 45 durch einen sogenannten Handshake-Verbindungsaufbau zu realisieren. Dabei ist die Interface-Logik 18 zum probeweisen Kommunikationsaufbau zu einem korrespondierenden Kommunikationselement in Form eines kartenförmigen Datenträgers 11 an der zweiten Schnittstelle 10 ausgebildet.

Vor allem dann, wenn auch umfangreichere hardwaretechnische Adaptierungen der Recheneinheit 1 erforderlich sind, werden die jeweiligen Hardwarekomponenten auf einer geeigneten Schnittstellenkarte für die Recheneinheit 1 angeordnet.

Die Erfassungsvorrichtung 49 bzw. der Schalter 51 kann aber auch modulseitig ausgebildet sein und der jeweilige Zustand an der Steckverbindung 28 kann über die Interface-Logik 18 und die Datenleitungen 40 bzw. die Schnittstelle 9 der übergeordneten Recheneinheit 1 mitgeteilt werden. Anstelle dieser aktiven Meldung, ausgehend vom Modul 4 an die Recheneinheit 1, ist es aber auch möglich, daß die Recheneinheit 1 über den installierten Treiber zyklisch die Zustände an der jeweiligen Schnittstelle, insbesondere an der USB-Schnittstelle 3 überprüft.

Aus diesem Grund ist es besonders vorteilhaft, wenn das Modul 4 derart ausgebildet ist, daß es an eine USB-Schnittstelle 3 einer Recheneinheit 1 ankoppelbar ist. Die Spezifikation einer USB-Schnittstelle 3 erlaubt es nämlich, während des laufenden Betriebes der Recheneinheit 1 das Modul 4 anzuschließen und kann unmittelbar darauf das Modul 4 von der Recheneinheit 1 erkennen. Idealerweise sind daher vom Benutzer keine wesentlichen Start- bzw. Initialisierungsvorgänge einzuleiten, wodurch ein hoher Bedienungskomfort erreicht wird. Im Idealfall ist es ausreichend, das Modul 4 an die USB-Schnittstelle 3 anzuschließen und es ist daraufhin sofort die durch das jeweilige Modul 4 erzielbare Funktion über die Recheneinheit 1 verfügbar.

Gleichfalls ist es vor allem bei Anbindung des Moduls 4 an eine USB-Schnittstelle 3 ermöglicht, das Modul 4 während des laufenden Betriebes der Recheneinheit 1 wieder von der jeweiligen USB-Schnittstelle 3 zu entfernen, ohne daß daraus Systembelastungen bzw. Systemabstürze resultieren. Vor allem durch die Nutzung der USB-Schnittstelle 3 einer beliebigen Recheneinheit 1 ist eine einfache Integration in alle Arten von Anwendungen, wie z.B. Purse-Anwendungen, auf dem Internet basierende Smartcard-Anwendungen oder Homebanking-Anwendungen möglich. Die weite Verbreitung von USB-Schnittstellen 3 begünstigt zudem die Schaffung eines weitreichenden Standards für Kartenlese- bzw. Kartenschreibsysteme. Insbesondere können Kartenlesegeräte und Computer verschiedenster Hersteller, aufgrund dieser Standardspezifizierung, häufiger zusammenarbeiten.

Die Anwendungsgebiete für das erfindungsgemäße Modul zum Lesen bzw. Schreiben auf intelligente, portable Datenspeicher bzw. Kleinstcomputer sind vielfältigst. So ist es z.B. möglich, das Modul 4 zur Verwaltung, insbesondere zum Lesen und Beschreiben von Sicherheitskarten, insbesondere von SIM-Karten für den Mobiltelefoniebereich zu verwenden. Ebenso ist es möglich, das Modul 4 und einen entsprechenden Datenträger 11 bzw. Kartenkörper 12 als digitale, personenbezogene Signatur zu verwenden, um Zahlungen, ähnlich den bekannten elektronischen Zahlungssystemen, wie z.B. dem Quick-System, vorzunehmen. Ebenso ist es möglich, das Modul 4 mit einem entsprechenden Datenträger 11 bzw. Kartenkörper 12 als Ausweis bzw. als lösch- und beschreibbares Speichermedium für Gesundheitsdaten, Personendaten, Video- und/oder Audiodaten, insbesondere Multimediadaten und sonstige Bilddaten oder dgl. zu verwenden.

Ebenso ist es möglich, das Modul 4 im Handelsbereich für Treuebonussysteme oder als Mitgliedsausweis zu verwenden.

Anstelle der Verwendung von Datenträgern 11 bzw. Kartenkörpern 12 für kontaktbehaftete Lese- bzw. Schreibsysteme, ist es auch möglich, kontaktlose Datenträger 11 bzw. sogenannte Proximity-Datenträger 11 zu verwenden.

In Anbetracht vorstehender Anwendungsbeispiele ist es demnach auch möglich, daß die übergeordnete Recheneinheit 1 durch eine allgemeine Kommunikationsvorrichtung 52, wie z.B. einen Telefonapparat, ein Mobiltelefon oder einen elektronischen Organizer gebildet ist. Jedenfalls besitzt auch der Datenträger 11 bzw. der Kartenkörper 12 einen Mikrorechner und wenigstens eine mit diesem in Verbindung stehende Speichervorrichtung, von welcher Daten ausgelesen und/oder in welcher relevante Daten dauerhaft hinterlegt werden können.

Relevante Daten für diese Speichervorrichtung sind z.B. personenbezogene Daten und/oder fortlaufend zu aktualisierende Daten, wie z.B. ein Restwert und/oder ein Berechtigungs- und/oder ein Identifizierungsschlüssel für beliebige Zugangskontrollsysteme.

Gemäß einer vorteilhaften Weiterbildung umfaßt das Modul 4 eine dritte Schnittstelle 53, welche die gleichen technischen Spezifikationen wie die erste Schnittstelle 9 aufweist. Insbesondere ist es über diese zusätzliche, externe Schnittstelle 53 möglich, direkt am Modul 4 beliebige busfähige Teilnehmer, beispielsweise Drucker, weitere Lese- und/oder Schreibgeräte, entsprechende Eingabevorrichtungen und dgl. anzuschließen. Diese optional vorhandene, zusätzliche Schnittstelle 53 entspricht üblicherweise der vom Modul 4 an der Recheneinheit 1 belegten USB-Schnittstelle 3. Durch diese Weiterbildung wird verhindert, daß durch das Anschließen des Moduls 4 an der Recheneinheit 1 dessen USB-Schnittstelle 3 für sonstige Geräte belegt ist. Insbesondere ist es dadurch möglich, mehrere USB-fähige Vorrichtungen kettenartig aneinanderzuschalten. Üblicherweise sind hierbei die elektrischen Leitungen der Schnittstelle 9, insbesondere die Stromversorgungsleitung 39 und die Datenleitung 40 zusätzlich an die entsprechend ausgefuhrte Steckverbindung am Gehäuse geführt, wie dies durch den in strichlierten Linien dargestellten Doppelpfeil veranschaulicht ist.

Entsprechend einer alternativen Ausgestaltung kann der Schalter 46 auch direkt mit einer weiteren rechnerseitigen Zustandserkennung 54 zur Repräsentierung der Präsenz eines Kartenkörpers 12 wirkungsverbunden sein, wie dies mit strichlierten Linien angedeutet wurde. Gemäß einer vorteilhaften Weiterbildung meldet die rechnerseitige Zustandserkennung 50 für die Präsenz des Moduls 4 das Modul 4 stets anwesend und ist die weitere rechnerseitige Zustandserkennung 54, welche die Präsenz eines Kartenkörpers 12 repräsentiert, abhängig vom Status des Schalters 51, also von der Präsenz eines Moduls 4, gesetzt oder gelöscht.

Es ist eine weitere vorteilhafte Ausbildung des Moduls 4, wenn die erste und/oder die zweite Schnittstelle 9; 10 wenigstens eine Sende- und/oder Empfangsantenne oder entsprechende elektrische Spulenanordnungen zur Aussendung und/oder zum Empfangen elektromagnetischer Wellen zur drahtlosen Stromversorgung der Interface-Logik 18 und/oder des Kartenkörpers 12 umfaßt. Über entsprechende Sende- und/oder Empfangsvorrichtungen im Modul 4 ist es auch möglich, dieses zur drahtlosen Übertragung und/oder zum Empfang von Daten bzw. Informationen auszubilden. Vorteilhaft ist es dabei, wenn die zweite Erfassungsvorrichtung 49 zur Erkennung des Vorliegens einer entsprechenden räumlichen Nähe zu einer korrespondierenden Recheneinheit 1 für eine mögliche Spannungsversorgung und/oder Datenübermittlung ausgebildet ist, um ungewollte, automatische Zuordnungen zu vermeiden und den Manipulationsaufwand für einen Kommunikationsaufbau möglichst gering zu halten.

Gemäß einer alternativen, vorteilhaften Weiterbildung kann das Modul 4 bzw. dessen Gehäuse 16 auch einen Sensor zur Erfassung biometrischer Körpermerkmale, insbesondere einen Fingerabdrucksensor umfassen. Dieser biometrische Sensor ist dabei mit der Interface-Logik 18 verbunden und/oder über die zweite Schnittstelle 10 mit einem daran anschaltbaren, integrierten Schaltkreis 13 des Kartenkörpers 12 koppelbar.

Der Ordnung halber sei abschließend darauf hingewiesen, daß zum besseren Verständnis des Moduls 4 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4 gezeigten Ausführungen und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Recheneinheit
- 2: Personalcomputer
- 3: USB-Schnittstelle
- 4: Modul
- 5: Kommunikationsmittel

- 6: Kommunikarionsnetzwerk
- 7: Internet
- 8: Modem
- 9: Schnittstelle
- 10: Schnittstelle

- 11: Datenträger
- 12: Kartenkörper
- 13: Schaltkreis
- 14: SIM-Karte
- 15: Steckerteil

- 16: Gehäuse
- 17: Tragkörper
- 18: Interface-Logik
- 19: Interpreter
- 20: Mikrorechner

- 21: Speichervorrichtung
- 22: Taktgenerator
- 23: Kontaktelement
- 24: Ein- und/oder Ausgang
- 25: Kontaktelement

- 26: Ein- und/oder Ausgang
- 27: Kontaktelement
- 28: Steckverbindungsvorrichtung
- 29: Steckverbindungsvorrichtung
- 30: Ausnehmung

- 31: Aufnahmeschlitz
- 32: Bodenteil
- 33: Deckelteil
- 34: Schwenkachse
- 35: Verbindungsvorrichtung

- 36: Schnappverbindung
- 37: Haltestege
- 38: Kontaktzunge
- 39: Stromversorgungsleitung
- 40: Datenleitung

- 41: Spannungswandler
- 42: Stromversorgungsleitung
- 43: Taktleitung
- 44: Datenleitung
- 45: Erfassungsvorrichtung

- 46: Schalter
- 47: Signalleitung
- 48: Meßvorrichtung
- 49: Erfassungsvorrichtung
- 50: Zustandserkennung

- 51: Schalter
- 52: Kommunikationsvorrichtung
- 53: Schnittstelle
- 54: Zustandserkennung

## Patentansprüche

1. Kompaktes elektronisches Modul (4) zur Ankopplung an eine übergeordnete Recheneinheit (1), mit einer ersten Schnittstelle (9), zumindest zur kommunikativen Anbindung zur übergeordneten Recheneinheit (1), einer zweiten Schnittstelle (10), zumindest zur kommunikativen Verbindung mit einem auswechselbar einsetzbaren Kartenkörper (12) mit einem darauf angeordneten, integrierten Schaltkreis (13) und mit einer Interface-Logik (18), welche einerseits mit der ersten Schnittstelle (9) und andererseits mit der zweiten Schnittstelle (10) elektrisch verbunden ist, und welche als Interpreter (19) zwischen einem für die erste Schnittstelle (9) gültigen Kommunikationsprotokoll und einem dazu unterschiedlichen Kommunikationsprotokoll für die zweite Schnittstelle (10) vorgesehen ist und wobei zumindest die Interface-Logik (18) und die zweite Schnittstelle (10) von einem Gehäuse (16) umgeben sind und eine Ausnehmung (30) oder eine Aufnahmeöffnung im Gehäuse (16) zur bedarfsweise auswechselbaren, werkzeuglos austauschbaren Halterung des Kartenkörpers (12) ausgebildet ist, **dadurch gekennzeichnet, daß** die erste Schnittstelle (9) als Steckverbindungsvorrichtung (28) mit mehreren Kontaktelementen (27) zur direkten Ankopplung an eine USB-Schnittstelle (3) einer übergeordneten Recheneinheit (1) ausgebildet ist und als Kartenkörper (12) ein Datenträger (11) in Form einer sogenannten SIM-Karte (14) vorgesehen ist und dass das Modul (4) eine Baugröße in etwa eines mechanischen Schlüssels oder eines sogenannten Dongle besitzt, wobei die Steckverbindungsvorrichtung (28) der ersten Schnittstelle (9) extern zum Gehäuse (16) angeordnet ist und deren Kontaktelemente (27) vom Gehäuse (16) steckerartig vorkragen.

2. Elektronisches Modul nach Anspruch 1, **dadurch gekennzeichnet, daß** die zweite Schnittstelle (10) als Steckverbindungsvorrichtung (29) zu einem Kartenkörper (12) mit integriertem Schaltkreis (13) ausgebildet ist.

3. Elektronisches Modul nach Anspruch 1 oder 2, **dadurch gekennzeichnet, daß** die zweite Schnittstelle (10) im Bereich einer Aufnahme für den Kartenkörper (12) Kontaktelemente (25) zur elektrischen Verbindung mit dessen integrierten Schaltkreis (13) aufweist.

4. Elektronisches Modul nach Anspruch 1, **dadurch gekennzeichnet, daß** der kartenförmige Datenträger (11) Abmessungen von in etwa 25 x 15 mm aufweist.

5. Elektronisches Modul nach Anspruch 1, **dadurch gekennzeichnet, daß** die Aufnahmeöffnung als Aufnahmeschlitz (31) zur wenigstens teilweisen Aufnahme des Kartenkörpers (12) ausgebildet ist.

6. Elektronisches Modul nach Anspruch 3, **dadurch gekennzeichnet, daß** die Kontaktelemente (25) federnd gelagert und derart positioniert sind, daß diese beim Einsetzen des Kartenkörpers (12) zwangsweise mit dem integrierten Schaltkreis (13) in elektrische Verbindung treten.

7. Elektronisches Modul nach einem oder mehreren der vorhergehenden Ansprüche, **dadurch gekennzeichnet, daß** die Interface-Logik (18) durch einen Mikrorechner (20) oder eine miniaturisierte, elektronische Datenverarbeitungsvorrichtung zur Abarbeitung eines vordefinierten Programmes ausgebildet ist.

8. Elektronisches Modul nach Anspruch 1, **dadurch gekennzeichnet, daß** die Interface-Logik (18) durch eine Gatteranordnung mit fix programmiertem Steuerungsablauf gebildet ist.

9. Elektronisches Modul nach einem oder mehreren der vorhergehenden Ansprüche, **dadurch gekennzeichnet, daß** die Interface-Logik (18) einen Taktgenerator (22) umfaßt.

10. Elektronisches Modul nach Anspruch 9, **dadurch gekennzeichnet, daß** der Taktgenerator (22) den Arbeitstakt zumindest für den integrierten Schaltkreis (13) am austauschbaren Kartenkörper (12) vorgibt.

11. Elektronisches Modul nach einem oder mehreren der vorhergehenden Ansprüche, **dadurch gekennzeichnet, daß** eine erste Erfassungsvorrichtung (45) zur Erfassung eines im Gehäuse (16) vorhandenen Kartenkörpers (12) vorgesehen ist.

12. Elektronisches Modul nach Anspruch 11, **dadurch gekennzeichnet, daß** die erste Erfassungsvorrichtung (45) durch einen beim Einführen oder Einsetzen des Kartenkörpers (12) zwangsweise betätigten Schalter (46) gebildet ist.

13. Elektronisches Modul nach Anspruch 11 oder 12, **dadurch gekennzeichnet, daß** die erste Erfassungsvorrichtung (45) mit der Interface-Logik (18) leitungsverbunden ist.

14. Elektronisches Modul nach Anspruch 11, **dadurch gekennzeichnet, daß** die erste Erfassungsvorrichtung (45) durch eine Meßvorrichtung (48) zur Erfassung des elektrischen Widerstandes oder des Stromverbrauchs an der zweiten Schnittstelle gebildet ist.

15. Elektronisches Modul nach Anspruch 11, **dadurch gekennzeichnet, daß** die erste Erfassungsvorrichtung (45) kontaktlos arbeitet und durch optische oder induktive Erfassungselemente gebildet ist.

16. Elektronisches Modul nach einem oder mehreren der vorhergehenden Ansprüche, **dadurch gekennzeichnet, daß** eine zweite Erfassungsvorrichtung (49) zur Erfassung des Vorliegens einer aktiven Steckverbindung mit der ersten Schnittstelle (9) ausgebildet ist.

17. Elektronisches Modul nach Anspruch 16, **dadurch gekennzeichnet, daß** die zweite Erfassungsvorrichtung (49) eine Zustandserkennung (50) umfaßt.

18. Elektronisches Modul nach Anspruch 17, **dadurch gekennzeichnet, daß** die Zustandserkennung (50) durch eine Programmroutine gebildet ist.

19. Elektronisches Modul nach Anspruch 16, **dadurch gekennzeichnet, daß** die zweite Erfassungsvorrichtung (49) durch eine von der übergeordneten Recheneinheit (1) ausführbare Programmroutine, insbesondere durch einen sogenannten Treiber, gebildet ist.

20. Elektronisches Modul nach Anspruch 19, **dadurch gekennzeichnet, daß** der rechnerseitig installierbare Treiber die Kommunikation mit dem elektronischen Modul (4) ermöglicht.

21. Elektronisches Modul nach Anspruch 16, **dadurch gekennzeichnet, daß** die zweite Erfassungsvorrichtung (49) durch eine Meßvorrichtung zur Erfassung des elektrischen Widerstandes oder des Stromflusses an der ersten Schnittstelle (9) ausgebildet ist.

22. Elektronisches Modul nach Anspruch 16, **dadurch gekennzeichnet, daß** die zweite Erfassungsvorrichtung (49) durch einen bei Aktivierung der Steckverbindung zwangsweise betätigten, elektrischen Schalter (51) gebildet ist.

23. Elektronisches Modul nach Anspruch 22, **dadurch gekennzeichnet, daß** der Schalter (51) mit der Zustandserkennung (50) wirkungsverbunden ist.

24. Elektronisches Modul nach Anspruch 12, **dadurch gekennzeichnet, daß** der Schalter (46) mit einer rechnerseitigen Zustandserkennung (54) zur Repräsentierung der Präsenz eines Kartenkörpers (12) wirkungsverbunden ist.

25. Elektronisches Modul nach Anspruch 16, **dadurch gekennzeichnet, daß** die zweite Erfassungsvorrichtung (49) durch einen sogenannten Handshake-Verbindungsaufbau implementiert ist, gemäß welchem nach Aussendung eines Abfragesignals durch eine Rechenheit (1) von der Interface-Logik (18) ein entsprechendes Rückantwortsignal rückübermittelbar ist.

26. Elektronisches Modul nach Anspruch 11, **dadurch gekennzeichnet, daß** die erste Erfassungsvorrichtung (45) durch einen sogenannten Handshake-Verbindungsaufbau realisiert ist, gemäß welchem die Interface-Logik (18) zum probeweisen Kommunikationsaufbau zu einem korrespondierenden Kommunikationselement in Form eines kartenförmigen Datenträgers (11) an der zweiten Schnittstelle (10) ausgebildet ist.

27. Elektronisches Modul nach Anspruch 17 und 24, **dadurch gekennzeichnet, daß** die rechnerseitige Zustandserkennung (50) für die Präsenz des Moduls (4) das Modul (4) stets anwesend meldet und die weitere rechnerseitige Zustandserkennung (54), welche die Präsenz eines Kartenkörpers (12) repräsentiert, abhängig vom Status des Schalters (51), also von der Präsenz eines Moduls (4), gesetzt oder gelöscht ist.

28. Elektronisches Modul nach einem oder mehreren der vorhergehenden Ansprüche, **dadurch gekennzeichnet, daß** die erste Schnittstelle (9) Stromversorgungsleitungen (39) zur Übertragung elektrischer Energie von einer übergeordneten Recheneinheit (1) an die Interface-Logik (18) und wenigstens eine Datenleitung (40) zur Interface-Logik (18) umfaßt.

29. Elektronisches Modul nach einem oder mehreren der vorhergehenden Ansprüche, **dadurch gekennzeichnet, daß** die erste und/oder die zweite Schnittstelle (9; 10) wenigstens eine Sende- und/oder Empfangsantenne oder entsprechende elektrische Spulenanordnungen zur Aussendung und/oder zum Empfangen elektromagnetischer Wellen zur drahtlosen Stromversorgung der Interface-Logik (18) und/oder des Kartenkörpers (12) und/oder zur drahtlosen Übertragung und/oder zum Empfang von Daten bzw. Informationen umfaßt.

30. Elektronisches Modul nach Anspruch 1, **dadurch gekennzeichnet, daß** eine zweite Erfassungsvorrichtung (49) zur Erkennung des Vorliegens einer entsprechenden räumlichen Nähe zu einer korrespondierenden Recheneinheit (1) für eine mögliche Spannungsversorgung und/oder Datenübermittlung ausgebildet ist.

31. Elektronisches Modul nach einem oder mehreren der vorhergehenden Ansprüche, **dadurch gekennzeichnet, daß** die zweite Schnittstelle (10) Stromversorgungsleitungen (42) zur Übertragung elektrischer Energie von der Interface-Logik (18) oder direkt von der ersten Schnittstelle (9) zum integrierten Schaltkreis (13) des Kartenkörpers (12) und wenigstens eine Datenleitung (44) zur Interface-Logik (18) umfaßt.

32. Elektronisches Modul nach einem oder mehreren der vorhergehenden Ansprüche, **dadurch gekennzeichnet, daß** die zweite Schnittstelle (10) wenigstens eine Taktleitung (43) vom Taktgenerator (22) zum entsprechenden Kontaktelement (23) für den integrierten Schaltkreis (13) am Kartenkörper (12) aufweist.

33. Elektronisches Modul nach einem oder mehreren der vorhergehenden Ansprüche, **dadurch gekennzeichnet, daß** als übergeordnete Recheneinheit (1) ein Computer für allgemeine Verwendungszwecke, wie z.B. ein PC, Laptop oder eine Workstation vorgesehen ist.

34. Elektronisches Modul nach einem oder mehreren der vorhergehenden Ansprüche, **dadurch gekennzeichnet, daß** als übergeordnete Recheneinheit (1) eine allgemeine Kommunikationsvorrichtung, wie z.B. ein Telefonapparat, ein Mobiltelefon oder ein elektronischer Organizer, vorgesehen ist.

35. Elektronisches Modul nach einem oder mehreren der vorhergehenden Ansprüche, **dadurch gekennzeichnet, daß** das elektrische Modul (4) als Adapter fungiert und Schreib- und/oder Lesevorgänge zwischen einer übergeordneten Recheneinheit (1) und dem integrierten Schaltkreis (13) auf dem Kartenkörper (12) ausführbar sind.

36. Elektronisches Modul nach einem oder mehreren der vorhergehenden Ansprüche, **dadurch gekennzeichnet, daß** das Gehäuse (16) einen Sensor zur Erfassung biometrischer Körpermerkmale, insbesondere einen Fingerabdrucksensor umfaßt, welcher mit der Interface-Logik (18) verbunden ist und/oder über die zweite Schnittstelle (10) mit einem daran anschaltbaren integrierten Schaltkreis (13) des Kartenkörpers (12) koppelbar ist.

37. Elektronisches Modul nach einem oder mehreren der vorhergehenden Ansprüche, **dadurch gekennzeichnet, daß** der Kartenkörper (12) durch ein elektronisches Identifikations- und/oder Berechtigungs- und/oder Zahlungsmittel gebildet ist.

38. Elektronisches Modul nach einem oder mehreren der vorhergehenden Ansprüche, **dadurch gekennzeichnet, daß** der einsetzbare Kartenkörper (12) einen Mikrorechner und wenigstens eine mit diesem in Verbindung stehende Speichervorrichtung umfaßt.

39. Elektronisches Modul nach Anspruch 38, **dadurch gekennzeichnet, daß** in der Speichervorrichtung personenbezogene Daten und/oder fortlaufend zu aktualisierende Daten, wie z.B. ein Restwert, und/oder ein Berechtigungs- und/oder ein Identifizierungsschlüssel hinterlegt sind.

## Claims

1. Compact electronic module (4) for coupling with a higher-level computer unit (1), with a first interface (9) for providing at least a communication link to the higher-level computer unit (1), a second interface (10) for providing at least a communication link to an interchangeable, insertable card body (12) with an integrated circuit (13) disposed thereon and with an interface logic (18) which is electrically connected to the first interface (9) on the one hand and to the second interface (10) on the other hand, and which is provided as an interpreter (19) between a communication protocol valid for the first interface (9) and another different communication protocol for the second interface (10) in which at least the interface logic (18) and the second interface (10) are enclosed by a housing (16) and a recess (30) or a housing orifice in the housing (16) is designed for holding the card body (12) which can be changed as and when necessary and replaced without tools, **characterised in that** the first interface (9) is provided in the form of a plug-in connector (28) with several contact elements (27) for establishing a direct connection to a USB interface (3) of a higher-level computer unit (1) and the card body (12) is as a data carrier (11) in the form of a so-called SIM card (14) and the module (4) is of a size in the order of a mechanical key or a so-called dongle and the plug-in connector (28) of the first interface (9) is disposed externally to the housing (16) and its contact elements (27) stand proud of the housing (16) in a plug arrangement.

2. Electronic module as claimed in claim 1, **characterised in that** the second interface (10) is provided in the form of a plug-in connector (29) to a card body (12) with an integrated circuit (13).

3. Electronic module as claimed in claim 1 or 2, **characterised in that** the second interface (10) has contact elements (25) in the region of a compartment for the card body (12) to provide an electrical connection to its integrated circuit (13).

4. Electronic module as claimed in claim 1, **characterised in that** the dimensions of the card-shaped data carrier (11) are approximately 25 x 15 mm.

5. Electronic module as claimed in claim 1, **characterised in that** the housing orifice is designed as a housing slot (31) for at least partially accommodating the card body (12).

6. Electronic module as claimed in claim 3, **characterised in that** the contact elements (25) are resiliently mounted and positioned such that when the card body (12) is inserted, they forcibly establish an electrical connection with the integrated circuit (13).

7. Electronic module as claimed in one or more of the preceding claims, **characterised in that** the interface logic (18) is provided in the form of a micro-computer (20) or a miniaturised electronic data processing device for running a predefined programme.

8. Electronic module as claimed in claim 1, **characterised in that** the interface logic (18) is provided in the form of a gate array with a fixedly programmed control sequence.

9. Electronic module as claimed in one or more of the preceding claims, **characterised in that** the interface logic (18) incorporates a clock-pulse generator (22).

10. Electronic module as claimed in claim 9, **characterised in that** the clock-pulse generator (22) predetermines the cycle timing for at least the integrated circuit (13) on the interchangeable card body (12).

11. Electronic module as claimed in one or more of the preceding claims, **characterised in that** a first detection device (45) is provided for detecting whether a card body (12) is present in the housing (16).

12. Electronic module as claimed in claim 11, **characterised in that** the first detection device (45) is provided in the form of a switch (46) which is forcibly operated when the card body (12) is introduced or inserted.

13. Electronic module as claimed in claim 11 or 12, **characterised in that** the first detection device (45) is wired to the interface logic (18).

14. Electronic module as claimed in claim 11, **characterised in that** the first detection device (45) is provided in the form of a measuring device (48) for detecting the electrical resistance or the power consumption at the second interface.

15. Electronic module as claimed in claim 11, **characterised in that** the first detection device (45) operates contactlessly and is provided by means of optical or inductive elements.

16. Electronic module as claimed in one or more of the preceding claims, **characterised in that** a second detection device (49) is provided for detecting whether an active plug-in connection exists with the first interface (9).

17. Electronic module as claimed in claim 16, **characterised in that** the second detection device (49) incorporates a status detection system (50).

18. Electronic module as claimed in claim 17, **characterised in that** the status detection system (50) is provided in the form of a programme routine.

19. Electronic module as claimed in claim 16, **characterised in that** the second detection device (49) is provided in the form of a programme routine which can be run by the higher-level computer unit (1), in particular by means of a so-called driver.

20. Electronic module as claimed in claim 19, **characterised in that** the driver can be installed in the computer and enables communication with the electronic module (4).

21. Electronic module as claimed in claim 16, **characterised in that** the second detection device (49) is provided in the form of a measuring device for detecting the electrical resistance or the current flow at the first interface (9).

22. Electronic module as claimed in claim 16, **characterised in that** the second detection device (49) is provided in the form of an electric switch (51) which is forcibly operated when the plug connection is activated.

23. Electronic module as claimed in claim 22, **characterised in that** the switch (51) is actively connected to the status detection system (50).

24. Electronic module as claimed in claim 12, **characterised in that** the switch (46) is actively connected to a computer-side status detection system (54) for representing the presence of a card body (12).

25. Electronic module as claimed in claim 16, **characterised in that** the second detection device (49) is operated on the basis of a so-called handshake connection structure, whereby, when an interrogation signal is transmitted via a computer unit (1) from the interface logic (18), a corresponding response signal can be transmitted back.

26. Electronic module as claimed in claim 11, **characterised in that** the first detection device (45) is operated on the basis of a so-called handshake connection structure, whereby the interface logic (18) is programmed to run tests for establishing a communication to a corresponding communication element in the form of a card-shaped data carrier (11) at the second interface (10).

27. Electronic module as claimed in claim 17 and 24, **characterised in that** the computer-side status detection system (50) for detecting the presence of the module (4) always reports the module (4) as being present and the other computer-side detection system (54) which represents the presence of a card body (12) is enabled or disabled depending on the status of the switch (51), in other words the presence of a module (4).

28. Electronic module as claimed in one or more of the preceding claims, **characterised in that** the first interface (9) has power supply lines (39) for transmitting electrical energy from a higher-level computer unit (1) to the interface logic (18) and at least one data line (40) to the interface logic (18).

29. Electronic module as claimed in one or more of the preceding claims, **characterised in that** the first and/or the second interface (9; 10) has at least one transmitting and/or receiving antenna or appropriate electric coil arrangements for transmitting and/or receiving electromagnetic waves in order to establish a wireless power supply for the interface logic (18) and/or the card body (12) and/or for wirelessly transmitting and/or receiving data and information.

30. Electronic module as claimed in claim 1, **characterised in that** a second detection device (49) is programmed to detect the presence of an appropriate spatial proximity to a corresponding computer unit (1) for a possible voltage supply and/or data transmission.

31. Electronic module as claimed in one or more of the preceding claims, **characterised in that** the second interface (10) has power supply lines (42) for transmitting electrical energy from the interface logic (18) or directly from the first interface (9) to the integrated circuit (13) of the card body (12) and at least one data line (44) to the interface logic (18).

32. Electronic module as claimed in one or more of the preceding claims, **characterised in that** the second interface (10) has at least one clock line (43) from the clock-pulse generator (22) to the corresponding contact element (23) for the integrated circuit (13) on the card body (12).

33. Electronic module as claimed in one or more of the preceding claims, **characterised in that** a computer for general application purposes, such as a PC, laptop or a work station, for example, is provided as the higher level computer unit (1).

34. Electronic module as claimed in one or more of the preceding claims, **characterised in that** a general communication device, such as a telephone set, a mobile telephone or an electronic organiser for example, is provided as the higher -level computer unit (1).

35. Electronic module as claimed in one or more of the preceding claims, **characterised in that** the electric module (4) functions as an adapter and writing and/or reading routines can be run between a higher-level computer unit (1) and the integrated circuit (13) on the card body (12).

36. Electronic module as claimed in one or more of the preceding claims, **characterised in that** the housing (16) has a sensor for detecting biometric physical characteristics, in particular a finger print sensor, which is connected to the interface logic (18) and/or can be coupled via the second interface (10) to an integrated circuit (13) of the card body (12) which can be connected to it.

37. Electronic module as claimed in one or more of the preceding claims, **characterised in that** the card body (12) is designed as an electronic means of identification and/or authorisation and/or payment.

38. Electronic module as claimed in one or more of the preceding claims, **characterised in that** the insertable card body (12) has a micro-computer and at least one memory device connected to it.

39. Electronic module as claimed in claim 38, **characterised in that** personal data and/or data to be continuously updated, such as a residual value, and/or an authorisation key and/or an identification key are stored in the memory device.

## Revendications

1. Module électronique compact (4) pour le couplage à une unité de calcul subordonnée (1), avec une première interface (9), au moins pour la liaison communicative avec l'unité de calcul subordonnée (1), une deuxième interface (10), au moins pour la liaison communicative avec un corps de carte (12) insérable d'une manière échangeable avec un circuit intégré (13) disposé sur celui-ci et avec une logique d'interface (18) qui est reliée électriquement, d'une part, à la première interface (9) et, d'autre part, à la deuxième interface (10), et qui est prévue comme interprète (19) entre un protocole de communication valable pour la première interface (9) et un protocole de communication différent de celui-ci pour la deuxième interface (10), et où au moins la logique d'interface (18) et la deuxième interface (10) sont entourées par un boîtier (16), et un évidement (30) ou une ouverture de réception dans le boîtier (16) est réalisé pour la retenue remplaçable en cas de besoin, échangeable sans outil, du corps de carte (12), **caractérisé en ce que** la première interface (9) est réalisée comme dispositif formant système de couplage (28) avec plusieurs éléments de contact (27) pour le couplage direct à une interface USB (3) d'une unité de calcul subordonnée (1), et comme corps de carte (12), un support de données (11) sous forme d'une soi-disant carte SIM (14) est prévu, et **en ce que** le module (4) possède une grandeur de construction à peu près d'une clé mécanique ou d'un soi-disant boîtier de sécurité, où le dispositif formant système de couplage (28) de la première interface (9) est disposé à l'extérieur du boîtier (16) et ses éléments de contact (27) font saillie du boîtier (16) en forme de fiche.

2. Module électronique selon la revendication 1, **caractérisé en ce que** la deuxième interface (10) est réalisée comme dispositif formant système de couplage (29) vers un corps de carte (12) avec un circuit intégré (13).

3. Module électronique selon la revendication 1 ou 2, **caractérisé en ce que** la deuxième interface (10) présente dans la zone d'un logement du corps de carte (12) des éléments de contact (25) pour la connexion électrique avec son circuit intégré (13).

4. Module électronique selon la revendication 1, **caractérisé en ce que** le support de données en forme de carte (11) a des dimensions d'environ 25 x 15 mm.

5. Module électronique selon la revendication 1, **caractérisé en ce que** l'ouverture de réception est réalisée comme fente de réception (31) pour la réception au moins partielle du corps de carte (12).

6. Module électronique selon la revendication 3, **caractérisé en ce que** les éléments de contact (25) sont logés d'une manière élastique et sont positionnés de façon que ceux-ci, lors de la mise en place du corps de carte (12), entrent forcément en connexion électrique avec le circuit intégré (13).

7. Module électronique selon l'une ou plusieurs des revendications précédentes, **caractérisé en ce que** la logique d'interface (18) est réalisée par un microcalculateur (20) ou un dispositif de traitement de données électronique miniaturisé pour le traitement d'un programme prédéfini.

8. Module électronique selon la revendication 1, **caractérisé en ce que** la logique d'interface (18) est formée par un agencement de portes avec un déroulement de commande programmé fixement.

9. Module électronique selon l'une ou plusieurs des revendications précédentes, **caractérisé en ce que** la logique d'interface (18) comprend une horloge (22).

10. Module électronique selon la revendication 9, **caractérisé en ce que** l'horloge (22) impose la cadence au moins du circuit intégré (13) au corps de carte échangeable (12).

11. Module électronique selon l'une ou plusieurs des revendications précédentes, **caractérisé en ce qu'**un premier dispositif de détection (45) est prévu pour détecter un corps de carte (12) présent dans le boîtier (16).

12. Module électronique selon la revendication 11, **caractérisé en ce que** le premier dispositif de détection (45) est formé par un commutateur (46) actionné forcément lors de l'insertion ou de la mise en place du corps de carte (12).

13. Module électronique selon la revendication 11 ou 12, **caractérisé en ce que** le premier dispositif de détection (45) est connecté à la logique d'interface (18).

14. Module électronique selon la revendication 11, **caractérisé en ce que** le premier dispositif de détection (45) est formé par un dispositif de mesure (48) pour détecter la résistance électrique ou la consommation de courant à la deuxième interface.

15. Module électronique selon la revendication 11, **caractérisé en ce que** le premier dispositif de détection (45) fonctionne sans contact et est formé par des éléments de détection optiques ou inductifs.

16. Module électronique selon l'une ou plusieurs des revendications précédentes, **caractérisé en ce qu'**un deuxième dispositif de détection (49) est réalisé pour détecter la présence d'une connexion à fiche active avec la première interface (9).

17. Module électronique selon la revendication 16, **caractérisé en ce que** le deuxième dispositif de détection (49) comprend une reconnaissance d'état (50).

18. Module électronique selon la revendication 17, **caractérisé en ce que** la reconnaissance d'état (50) est formée par une routine de programme.

19. Module électronique selon la revendication 16, **caractérisé en ce que** le deuxième dispositif de détection (49) est formé par une routine de programme pouvant être exécutée par l'unité de calcul subordonnée (1), en particulier par un soi-disant circuit d'attaque.

20. Module électronique selon la revendication 19, **caractérisé en ce que** le circuit d'attaque pouvant être installé côté calculateur permet la communication avec le module électronique (4).

21. Module électronique selon la revendication 16, **caractérisé en ce que** le deuxième dispositif de détection (49) est réalisé par un dispositif de mesure pour détecter la résistance électrique ou le flux de courant à la première interface (9).

22. Module électronique selon la revendication 16, **caractérisé en ce que** le deuxième dispositif de détection (49) est formé par un commutateur électrique (51) actionné forcement lors de l'activation de la connexion à fiche.

23. Module électronique selon la revendication 22, **caractérisé en ce que** le commutateur (51) est relié fonctionnellement à la reconnaissance d'état (50).

24. Module électronique selon la revendication 12, **caractérisé en ce que** le commutateur (46) est relié fonctionnellement à une reconnaissance d'état côté calculateur (54) pour la représentation de la présence d'un corps de carte (12).

25. Module électronique selon la revendication 16, **caractérisé en ce que** le deuxième dispositif de détection (49) est réalisé par un soi-disant montage de mise en liaison selon lequel, après l'émission d'un signal d'interrogation par l'unité de calcul (1), la logique d'interface (18) peut retransmettre un signal de réponse correspondant.

26. Module électronique selon la revendication 11, **caractérisé en ce que** le premier dispositif de détection (45) est réalisé par un soi-disant montage de mise en liaison selon lequel la logique d'interface (18), pour un établissement de communication à l'essai à un élément de communication correspondant, est réalisée sous la forme d'un support de données (11) en forme de carte à la deuxième interface (10).

27. Module électronique selon la revendication 17 et 24, **caractérisé en ce que** la reconnaissance d'état côté calculateur (50), pour la présence du module (4), signale le module (4) toujours comme étant présent et que l'autre reconnaissance d'état côté calculateur (54), qui représente la présence d'un corps de carte (12), est en ou hors service en fonction de l'état du commutateur (51), donc de la présence d'un module (4).

28. Module électronique selon l'une ou plusieurs des revendications précédentes, **caractérisé en ce que** la première interface (9) comprend des lignes d'alimentation en courant (39) pour la transmission d'énergie électrique d'une unité de calcul superposée (1) à la logique d'interface (18) et au moins une ligne de données (40) vers la logique d'interface (18).

29. Module électronique selon l'une ou plusieurs des revendications précédentes, **caractérisé en ce que** la première et/ou la deuxième interface (9; 10) comprend au moins une antenne d'émission et/ou de réception ou des agencements de bobines électriques correspondants pour l'émission et/ou la réception d'ondes électromagnétiques pour l'alimentation en courant sans fil de la logique d'interface (18) et/ou du corps de carte (12) et/ou pour la transmission sans fil et/ou pour la réception de données respectivement d'informations.

30. Module électronique selon la revendication 1, **caractérisé en ce qu'**un deuxième dispositif de détection (49) est réalisé pour la détection de la présence d'une proximité spatiale correspondante à une unité de calcul correspondante (1) pour une alimentation en tension et/ou une transmission de données possible.

31. Module électronique selon l'une ou plusieurs des revendications précédentes, **caractérisé en ce que** la deuxième interface (10) comprend des lignes d'alimentation en courant (42) pour la transmission d'énergie électrique de la logique d'interface (18) ou directement de la première interface (9) au circuit intégré (13) du corps de carte (12) et au moins une ligne de données (44) vers la logique d'interface (18).

32. Module électronique selon l'une ou plusieurs des revendications précédentes, **caractérisé en ce que** la deuxième interface (10) présente au moins une ligne d'impulsions (43) de l'horloge (22) à l'élément de contact correspondant (23) pour le circuit intégré (13) au corps de carte (12).

33. Module électronique selon l'une ou plusieurs des revendications précédentes, **caractérisé en ce qu'**il est prévu comme unité de calcul subordonnée (1) un ordinateur d'un but d'utilisation générale, comme par exemple un PC, un ordinateur portable ou un poste de travail.

34. Module électronique selon l'une ou plusieurs des revendications précédentes, **caractérisé en ce que**, comme unité de calcul subordonnée (1), un dispositif de communication général, comme par exemple un appareil téléphonique, un téléphone mobile ou un organiseur électronique est prévu.

35. Module électronique selon l'une ou plusieurs des revendications précédentes, **caractérisé en ce que** le module électrique (4) fonctionne comme adaptateur et que des opérations d'écritures et/ou de lecture peuvent être effectuées entre une unité de calcul subordonnée (1) et le circuit intégré (13) sur le corps de carte (12).

36. Module électronique selon l'une ou plusieurs des revendications précédentes, **caractérisé en ce que** le boîtier (16) comprend un capteur pour la détection de caractéristiques corporelles biométriques, en particulier un capteur d'empreintes de doigts qui est relié à la logique d'interface (18) et/ou qui peut être couplé par la deuxième interface (10) à un circuit intégré (13) pouvant être connecté à celle-ci du corps de carte (12).

37. Module électronique selon l'une ou plusieurs des revendications précédentes, **caractérisé en ce que** le corps de carte (12) est formé par un moyen d'identification et/ou d'autorisation et/ou de paiement électronique.

38. Module électronique selon l'une ou plusieurs des revendications précédentes, **caractérisé en ce que** le corps de carte insérable (12) comprend un microcalculateur et au moins un dispositif de stockage en liaison avec celui-ci.

39. Module électronique selon la revendication 38, **caractérisé en ce que** sont stockées dans le dispositif de stockage des données se rapportant à la personne et/ou des données continuellement à actualiser, comme par exemple une valeur résiduelle et/ou une clé d'autorisation et/ou d'identification.
